# EUROPÄISCHE PATENTSCHRIFT

(11) **EP 2 874 559 B1**
(45) Veröffentlichungstag und Bekanntmachung des Hinweises auf die Patenterteilung: **16.10.2019**
(21) Anmeldenummer: 13747804.6
(22) Anmeldetag: 17.07.2013
(51) Int. Cl.: A61C 1/05

(54) **ZAHNÄRZTLICHES PRÄPARATIONSINSTRUMENT**
DENTISTS' PREPARATION INSTRUMENT
INSTRUMENT DE PRÉPARATION DENTAIRE

(30) Priorität: 17.07.2012 DE 102012212480
(43) Veröffentlichungstag der Anmeldung: 27.05.2015
(73) Patentinhaber: Sirona Dental Systems GmbH, 64625 Bensheim (DE)
(72) Erfinder: REIN, Matthias, 64653 Lorsch (DE); GOISSER, Siegfried, 64683 Einhausen (DE); ERTUGRUL, Metin, 63322 Rödermark (DE); SUTTER, Ralf, 69469 Weinheim (DE); MÜHLBEYER, Alexander, 89233 Neu Ulm (DE)
(74) Vertreter: Özer, Alpdeniz
(86) Internationale Anmeldenummer: PCT/EP2013/065057
(87) Internationale Veröffentlichungsnummer: WO 2014/012960

(56) Entgegenhaltungen:
- EP-A1- 0 497 139
- DE-A1- 10 060 152
- DE-C1- 4 320 532
- DE-C1- 4 428 039

## Beschreibung

### Technisches Gebiet

Die Erfindung betrifft ein zahnärztliches Präparationsinstrument mit einer Turbine zum Antrieb eines Werkzeugs mittels Druckluft. Ein in einer Turbinenkammer angeordneter und sich um eine Längsachse drehenden Rotor weist sich bis zu einer Stirnseite des Rotors hin erstreckende Schaufeln auf. Die Turbinenkammer weist eine Auslassöffnung für die Druckluft zu einem Rückluftkanal hin auf, wobei die Auslassöffnung derart in der Turbinenkammer angeordnet ist, dass die Stirnseite des Rotors bei der Drehung um die Längsachse seitlich an der Auslassöffnung vorbeistreicht.

### Stand der Technik

Aus der EP 0 974 308 B1 ist ein dentales Turbinen-Handstück bekannt, bei dem zum Zweck des Verhinderns des Ein- oder Rücksaugens nach dem Abschalten der Turbine aufgrund des Nachlaufens entstehenden Unterdrucks in einer Turbinenkammer vor der Auslassöffnung ein Strömungsvorhang erzeugt wird. Dies geschieht dadurch, dass ein in den Strömungsweg hineinragender Strömungssteg die Strömung von der Auslassöffnung nach innen ablenkt. Dem in der Turbinenkammer angeordneten Strömungssteg kann eine Strömungsnut vorgeschaltet sein, um die Strömungsstufe größer zu machen und die Wirkung zu erhöhen. Die Druckluft tritt dabei auf einer Stirnseite der Schaufeln aus und in eine im Turbinenrad vorgesehene Ringkammer ein, wo sie sich entspannt. Sowohl die Ringkammer als auch Teile der Schaufeln liegen der Auslassöffnung gegenüber. Im Funktionsbetrieb wird der Strömungsvorhang hingegen aufgrund des Druckgefälles durchbrochen.

Aus der DE 100 60 152 B4 ist ein dentales Turbinen-Handstück bekannt, bei dem zur Erhöhung des Drehmoments ein Rotor mit einem ersten und mit einem zweiten Turbinenrad versehen und es sind Verbindungskanäle vorgesehen, um das Druckmittel vom ersten Turbinenrad zu dem zweiten Turbinenrad umzulenken. In einer Ausführungsform wird die zweite Turbine zweimal durchströmt, was den Rotor bremst und die Drehzahl senkt.

Die Aufgabe der Erfindung besteht darin, zur Verbesserung der Lebensdauer und des Geräuschverhaltens eine Verringerung der Leerlaufdrehzahl zu erreichen, ohne jedoch die Wirkleistung in praktisch relevantem Maß einzuschränken.

### Darstellung der Erfindung

Ein erfindungsgemäßes zahnärztliches Präparationsinstrument mit einer Turbine zum Antrieb eines Werkzeugs mittels Druckluft weist einen in einer Turbinenkammer angeordneten und sich um eine Längsachse drehenden Rotor auf, der sich bis zu einer Stirnseite des Rotors hin erstreckende Schaufeln aufweist, wobei die Turbinenkammer eine Auslassöffnung für die Druckluft zu einem Rückluftkanal hin aufweist. Die Auslassöffnung ist derart in der Turbinenkammer angeordnet, dass sowohl die Stirnseite des Rotors bei der Drehung um die Längsachse an der Auslassöffnung vorbeistreicht als auch Teile der Schaufeln. Der Rotor weist auf der Stirnseite eine durch Vorsprünge gebildete Bremskontur und die Turbinenkammer einen Bremskonturraum auf, in dem die Bremskontur aufgenommen ist. Die Auslassöffnung erstreckt sich dabei teilweise auch über den Bremskonturraum. Zur Verstärkung der Bremswirkung ist im Rückluftkanal eine sich an die Auslassöffnung anschließende Wirbelkammer vorgesehen, deren Breite quer zur Längsachse und quer zur Strömungsrichtung des Rückluftkanals mindestens das 1,2-fache bis 3-fache und deren Länge LW in Strömungsrichtung des Rückluftkanals mindestens das 0,3-fache bis 1,5-fache einer Bezugsgröße a beträgt, wobei die Bezugsgröße a entweder als ein Bereich vom 0,5 bis 1,5-fachen der kleinsten Weite w oder als ein Bereich vom 0,5 bis 1,5-fachen der Höhe HLA der Schaufeln 11 des Rotors 6 ausgedrückt ist.

Die Bremskontur am Turbinenrad in Verbindung mit einem Rückluftkanal auf der Höhe der Bremskontur erzeugt eine stark drehzahlabhängige Bremskraft durch Nutzung der vorhandenen Luftströmung. Eine merkliche Reduzierung der Drehzahl bei einem nur geringen Verlust an Drehmoment wird deshalb erreicht, weil die Bremsleistung in dritter Ordnung von der Drehzahl abhängig ist, das bedeutet, dass bei einer geringen Drehzahl nur eine geringe Bremsleistung und bei einer höheren Drehzahl eine überproportional höhere Bremsleistung erzielt wird. Als Vorsprünge kommen insbesondere Rippen oder Stege in Betracht, die an der Stirnseite angeordnet sind, wobei ein Zwischenraum zwischen den Vorsprüngen radial zur Auslassöffnung hin geöffnet ist.

Die Funktion der Wirbelkammer besteht darin, die Abluft am Auslass zu verwirbeln, um dadurch die Wechselwirkung mit der Bremskontur zu verstärken.

Vorteilhafterweise kann die Turbinenkammer an der Auslassöffnung zur Wirbelkammer hin eine scharfe Auslasskante aufweisen. Die Verstärkung der Bremswirkung wird dadurch erreicht, dass an der Auslasskante durch den Strömungsabriss Auslasswirbel erzeugt werden, den in der Wirbelkammer Raum gegeben wird und die darüber hinaus in den Bremskonturraum eindringen und dort mit der Bremskontur zusammenwirken.

Eine vorteilhafte Weiterbildung besteht darin, dass die Auslassöffnung die Bremskontur in der Höhe vollständig überdeckt. Dadurch wird ein Eindringen der Rückluft in den Bremskonturraum erleichtert.

Vorteilhafterweise kann die Auslassöffnung die Schaufeln in der Höhe zumindest 70%, vorzugsweise vollständig überdecken.

Vorteilhafterweise kann die Stirnseite der Schaufeln der Turbine mit einer Scheibe abgedeckt sein und die Bremskontur über die Scheibe hervorstehen. Dadurch wird eine klare Funktionstrennung zwischen den Schaufeln der Turbine und der Bremskontur herbeigeführt und nur der Bremskonturraum mit der darin befindlichen Bremskontur wird mit der Abluft aus der Auslassöffnung bzw. aus der Wirbelkammer beaufschlagt. Dies hat den Vorteil, dass durch eine klare Funktionstrennung die Gestaltung der Bremskonturen hinsichtlich der Erhöhung des Strömungswiderstandes optimiert werden kann, wohingegen die Schaufeln hinsichtlich der Leistungssteigerung optimal gestaltet werden können. Die Bremskontur kann dabei so gestaltet sein, dass sie einen besonders hohen Luftwiderstandsbeiwert, auch als cW-Wert bezeichnet, aufweist.

Vorteilhafterweise kann die Bremskontur eine Höhe in Richtung der Längsachse von mindestens 5% der Höhe der Schaufeln aufweisen, vorzugsweise etwa 20% und höchstens 50%.

Eine vorteilhafte Weiterbildung kann darin bestehen, dass die Bremskontur Rippen aufweist, die gegenüber den Schaufeln der Turbine gegenläufig gekrümmt sind. Dadurch wird der Strömungswiderstand in der Bremskontur erhöht und damit auch die Bremsleistung.

Für die einfache Herstellung kann es von Vorteil sein, wenn die Wirbelkammer frei von zusätzlichen Leiteinrichtungen ist.

Vorteilhafterweise kann sich die Wirbelkammer über einen Bereich von maximal 120° erstrecken, wobei sie jedoch stets zwischen der Auslassöffnung und dem Rückluftkanal angeordnet ist.

Die Wirbelkammer kann gerundete Auslasskanten in den Rückluftkanal aufweisen, um Strömungsverluste bei den typischen Arbeitsdrehzahlen zu vermeiden.

### Kurze Beschreibung der Zeichnungen

Eine erfindungsgemäße Vorrichtung wird anhand der Zeichnung erläutert. Es zeigen:
- Fig. 1: ein zahnärztliches Präparationsinstrument mit einer Turbine zum Antrieb eines Werkzeugs mittels Druckluft mit einem Rotor mit Bremskontur in einer Seitenansicht;
- Fig. 2: die Turbinenkammer mit dem Rotor mit Bremskontur aus Fig. 1 in einer Seitenansicht im Detail;
- Fig. 3: die Turbinenkammer mit dem Rotor mit Bremskontur aus Fig. 1 und 2 in einer Ansicht auf die Bremskontur im Detail;
- Fig. 3A: ein Rotor mit einer gegenläufigen Bremskontur in Seitenansicht;
- Fig. 3B: den Rotor aus Fig. 3A in Draufsicht;
- Fig. 4: eine Ausführung der Turbinenkammer mit dem Rotor mit Bremskontur aus Fig. 2 mit einer zusätzlichen Wirbelkammer in einer Seitenansicht im Detail;
- Fig. 5: die Ausführung nach Fig. 4 mit dem Rotor mit Bremskontur aus Fig. 3 in einer Ansicht auf die Bremskontur im Detail.

### Ausführungsbeispiel

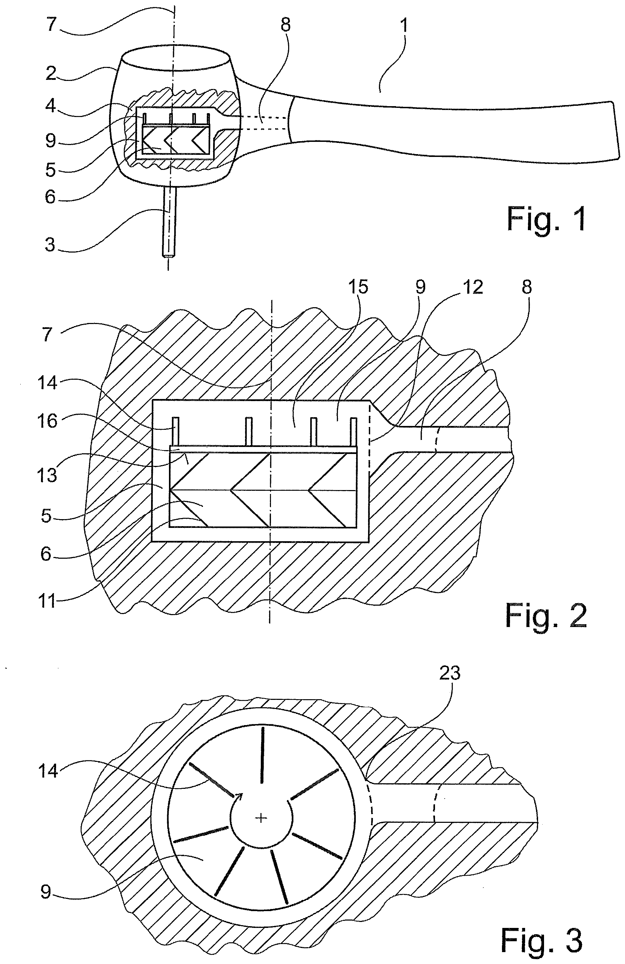

In Fig. 1 ist ein zahnärztliches Präparationsinstrument 1 schematisch in einer teilweise aufgebrochenen Seitenansicht dargestellt, welches zum Antrieb eines in einem Kopfteil 2 gelagerten und angetriebenen Werkzeugs 3 eine mit Druckluft beaufschlagte Turbine 4 aufweist. Die Turbine 4 umfasst eine Turbinenkammer 5, in der ein Rotor 6 um eine Längsachse 7 drehbar gelagert ist. Die Lagerung des Rotors 6 im Kopfteil 2 selbst und das Zusammenwirken des Rotors 6 mit dem Werkzeug 3 ist nicht dargestellt, es wird diesbezüglich auf den Stand der Technik verwiesen, aus dem unterschiedlichste Lösungen bekannt sind, beispielsweise in den eingangs zitierten Dokumenten.

Neben einer nicht dargestellten Druckluftzufuhr ist in dem Kopfteil 2 ein Rückluftkanal 8 vorgesehen, der die Druckluft aus der Turbinenkammer 5 herausführt, sodass die Druckluft durch ein Griffteil zu einem Kupplungsteil des Präparationsinstruments geführt ist, wie es aus dem Stand der Technik ebenfalls bekannt ist.

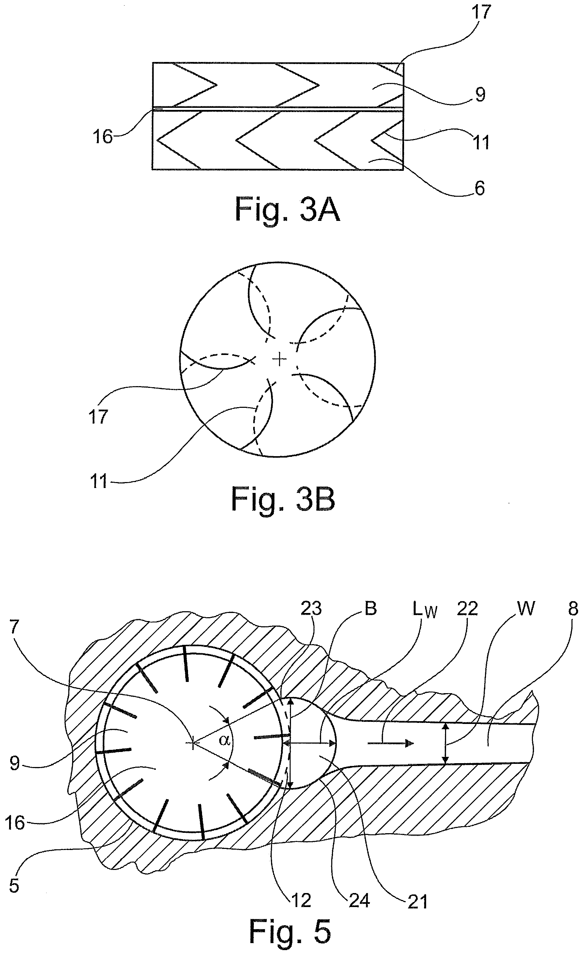

Bereits in Fig. 1 ist zu erkennen, dass der Rotor 6 mit einer Bremskontur 9 versehen ist, die zusammen mit dem Rotor 6 in der Turbinenkammer 5 angeordnet ist. Die Funktionsweise dieser Bremskontur 9 und das Zusammenspiel mit den übrigen Funktionsbauteilen wird in den Fig. 2 und 3 erläutert.

In Fig. 2 ist die Turbinenkammer 5 mit dem Rotor 6 im Detail dargestellt, wobei es sich nach wie vor um eine Prinzipskizze handelt, in der beispielsweise die Lagerung des Rotors 6 aus Gründen der Vereinfachung weggelassen wurde. Der Rotor 6 weist Schaufeln 11 auf, die zur Verbesserung des Wirkungsgrads die für den Antrieb der Turbine vorgesehene Druckluft umlenken. Die von den Schaufeln 11 abströmende Druckluft, auch als Abluft bezeichnet, verlässt die Turbinenkammer 5 über eine Auslassöffnung 12, die die Turbinenkammer 5 mit dem Rückluftkanal 8 verbindet und gelangt so in den Rückluftkanal 8.

Die Auslassöffnung 12 ist derart in der Turbinenkammer 5 angeordnet, dass sowohl die Stirnseite 13 des Rotors 6 als auch Teile der Schaufeln 11 bei der Drehung um die Längsachse 7 seitlich an der Auslassöffnung 12 vorbeistreichen.

Der Rotor 6 weist auf der Stirnseite 13 die Bremskontur 9 auf, welche durch Vorsprünge 14 gebildet ist, sodass innerhalb der Turbinenkammer 5 von der Funktion her gesehen ein Bremskonturraum 15 ausgebildet ist, in dem die Bremskontur aufgenommen ist. Wesentlich ist, dass sich die Auslassöffnung 12 teilweise auch über den Bremskonturraum 15 erstreckt.

Dies hat zur Folge, dass die Auslassöffnung 12 einen Auslassquerschnitt aufweist, der so bemessen ist, dass sowohl ein Teil der Schaufeln 11 als auch zumindest ein Teil der Bremskontur 9 an der Auslassöffnung vorbeistreichen.

Der Querschnitt der Auslassöffnung 12 kann dem Querschnitt des Rückluftkanals 8 entsprechen, es kann aber auch eine Querschnittsverringerung von dem Querschnitt der Auslassöffnung 12 zum Querschnitt des Rückluftkanals 8 erfolgen.

Grundsätzlich ist zunächst festzustellen, dass die um die Achse des Rotors strömende Abluft beim Übergang in den Auslasskanal die Richtung wechselt. Eine zunächst tangential gerichtete Geschwindigkeit der Abluft bekommt unmittelbar vor Eintritt in den Auslasskanal zunehmend eine radial zur Rotorachse gerichtete Geschwindigkeitskomponente. Die in Umfangsrichtung der Abluft gerichtete Geschwindigkeitskomponente nimmt demgegenüber ab. Dadurch stellt sich eine Relativgeschwindigkeit zwischen der Abluft und dem Rotor ein. Diese Geschwindigkeitsdifferenz erzeugt eine mit Druck beaufschlagte Fläche auf der stromabwärts gerichteten Seite der Bremskontur. Dieser so erzeugte Bremsdruck ist in zweiter Ordnung von der Drehzahl abhängig.

Die Stirnseite 13 der Schaufeln ist mit einer Scheibe 16 abgedeckt und die Bremskontur 9 steht über die Scheibe 16 hervor. Der Strömungsweg ist so, dass die von den Schaufeln umgelenkte Druckluft in die Auslassöffnung 12 einströmt und hier zum Teil auch in den Bremskonturraum 15 gelangt, aus dem sie wiederum über dieselbe Auslassöffnung 12 entweichen kann, wenn es die Druckdifferenz zulässt. Auch andere Spaltverluste führen dazu, dass Druckluft in den Bremskonturraum eindringt. Insgesamt gilt aber, dass die Bremskontur nur einem Teilstrom der Druckluft ausgesetzt wird.

Die Vorsprünge 14 der Bremskontur 9 können durch über die Stirnseite vorstehende Rippen oder auch Stege gebildet sein, wie sich aus der Ansicht auf die Bremskontur von Fig. 3 ergibt. Die Vorsprünge sind am Außenumfang angeordnet, wobei ein Zwischenraum zwischen den Vorsprüngen radial zur Auslassöffnung hin geöffnet ist.

Die Vorsprünge 14 der Bremskontur können auch in Form von Rippen 17 ausgebildet sein, die gegenüber den Schaufeln 11 des Rotors zur Erhöhung des cW-Werts gegenläufig gekrümmt sind, schematisch dargestellt in den Fig. 3A und 3B. Auch hier ist die Stirnseite 13 der Schaufeln 11 des Rotors 6 mit einer Scheibe 16 abgedeckt.

Die Anzahl der Vorsprünge, wenn sie in Form von sich radial oder radial gekrümmt von der Längsachse weg erstreckenden Stegen oder Rippen ausgebildet sind kann dabei der Anzahl der Schaufeln entsprechen, wobei in vielen Fällen der Rotor sieben Schaufeln aufweist, die alle gleichmäßig über den Umfang verteilt angeordnet sind. Vorzugsweise sind jedoch mindestens zwei und höchstens die doppelte Anzahl wie die Anzahl der Schaufeln vorzusehen.

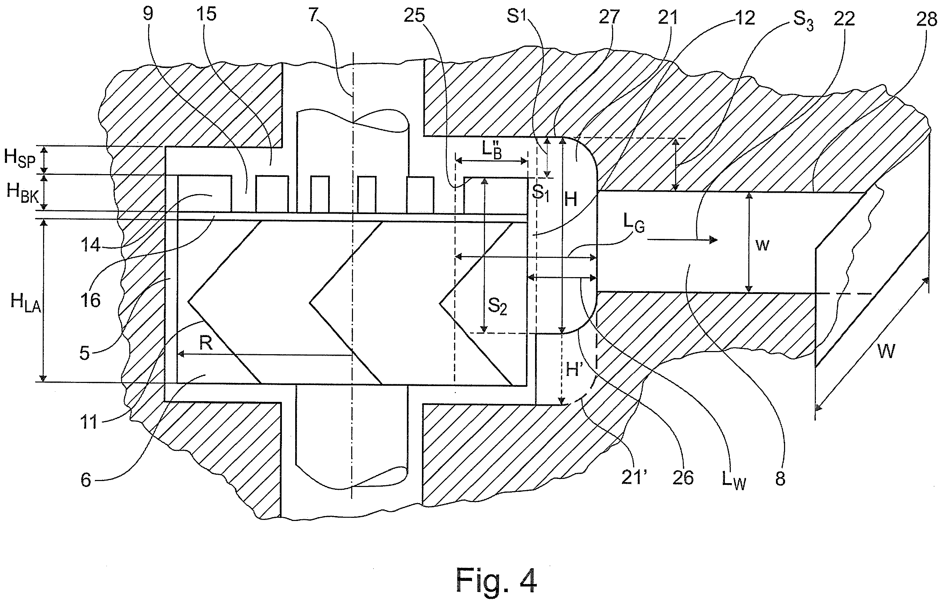

Fig. 4 zeigt in einer Seitenansicht eine Ausführung der Turbinenkammer 5 mit dem Rotor 6 mit der auf der Scheibe 16 angeordneten Bremskontur 9 aus Fig. 2 mit einer zwischen der Turbinenkammer 5 und dem Rückluftkanal 8 angeordneten Wirbelkammer 21. Die Auslassöffnung 12 der Turbinenkammer 5 geht in die Wirbelkammer 21 über, deren Höhe H in Richtung der Längsachse 7 wie dargestellt nur einen Teil der Schaufeln 11 überdecken kann, sie kann aber auch über die gesamte Höhe der Turbinenkammer 5 gehen, dargestellt als gepunktete Linie 21' und mit der Höhe H'.

Die Wechselwirkung mit der Bremskontur 9 wird verstärkt, weil die Relativgeschwindigkeit zwischen der Abluft und dem Rotor 6 größer wird, je größer der Geschwindigkeitsunterschied zwischen den Geschwindigkeitsvektoren der Abluft und des Rotors 6 an der Austrittsöffnung 12 vor dem Rückluftkanal 8 ist. Dieser Unterschied kann dadurch verstärkt werden, dass unmittelbar an der Austrittsöffnung 12 und vor dem Rückluftkanal 8 die Abluft verwirbelt wird, wodurch Teile der Abluft sogar entgegengerichtet der Rotordrehrichtung strömen können, was hier nicht dargestellt ist.

Die im Kopfgehäuse in Strömungsrichtung vor dem Rückluftkanal 8 angeordnete Wirbelkammer 21 weist eine Länge LW in Strömungsrichtung des Rückluftkanals 8 auf, angedeutet durch den Pfeil 22. Die Länge LB ist definiert durch die radiale Ausdehnung der Bremskontur, projiziert auf einer Ebene, die durch die Längsachse 7 und die Vorsprünge 14 der Bremskontur 9 selbst verläuft und soll mindestens der radialen Ausdehnung der Bremskontur am Rotor entsprechen, die maßgeblich mit einem sich in der Wirbelkammer 21 ausbildenden Wirbel zusammenwirkt. Der Wirbel ist aus Gründen der Übersichtlichkeit nicht dargestellt. Die gesamte dem Wirbel zur Verfügung stehende für ein Abbremsen wirksame Länge LG ist aus der Länge LW der Wirbelkammer und der Länge LB der Bremskontur gegeben.

Fig. 5 zeigt die Wirbelkammer 21 in einer Ansicht auf die Bremskontur 9, die auf der Scheibe 16 angeordnet ist. Es ist zu erkennen, dass sich die Wirbelkammer 21 an die Auslassöffnung 12 der Turbinenkammer 5 anschließt und eine Breite B quer zur Längsachse 7 und quer zur durch den Pfeil 22 dargestellten Strömungsrichtung des Rückluftkanals 8 aufweist.

Die Wirbelkammer 21 selbst weist an ihrem Übergang zum Rückluftkanal 8 gerundete Auslasskanten 24 auf, um die Strömungswiderstände in dem Rückluftkanal selbst zu verringern.

Eine mögliche Ausdehnung der Wirbelkammer 21 ist unter Bezugnahme auf die Fig. 4 und 5 wie folgt beschrieben, wobei als Bezugsgröße a sowohl die kleinste Weite w des Rücklaufkanals 8 oder auch ein auf die Höhe der Schaufeln 11 des Rotors 6 bezogenes Maß HLA, etwa mindestens die halbe Höhe HLA und maximal die doppelte Höhe HLA gewählt werden kann. Unter der kleinster Weite w wird das größte Maß verstanden, das eine Kugel gerade noch haben darf, um durch den Querschnitt zu passen. Bei einer kreisrunden Bohrung ist dies der Durchmesser der Bohrung, bei einem Quader die kurze Seite des Querschnitts. Es kann auch eine größte Weite W geben, die schematisch für einen rechteckigen Querschnitt des Rückluftkanals 8 eingezeichnet ist.

Damit kann die Bezugsgröße a entweder ausgedrückt werden als ein Bereich vom 0,5 bis 1,5-fachen der kleinsten Weite w oder als ein Bereich vom 0,5 bis 1,5-fachen der Höhe HLA der Schaufeln 11 des Rotors 6.

Für die Höhe H der Wirbelkammer 21 hat sich ein Bereich 0,5*a < H < 2*a, vorzugsweise H = a oder H = HBK + HLA als besonders geeignet herausgestellt. Die Länge LW der Wirbelkammer 21 liegt in einem Bereich 0,3*a < LW < 1,5*a, vorzugsweise ist LW = a. Die Breite B der Wirbelkammer 21 liegt in einem Bereich: 1,2*a < B < 3*a, vorzugsweise ist B = 1,2*a. Das Längenverhältnis der Länge LB der Bremskontur zu der Länge LW der Wirbelkammer 21 beträgt vorzugsweise ½, sodass sich für eine Gesamtlänge LG ein Verhältnis der Länge LB der Bremskontur zu der Gesamtlänge LG von 1/3 ergibt.

Als Höhe HBK der Bremskontur hat sich der Bereich von 0,05*HLA < HBK < 0,5*HLA als besonders geeignet herausgestellt, wiederum bezogen auf die Höhe HLA der Schaufeln 11 des Rotors 6, vorzugsweise: HBK = 0,2*HLA.

Die Länge LB der Bremskontur 9 ist definiert durch die radiale Ausdehnung der Bremskontur 9, projiziert auf einer Ebene, die durch die Längsachse 7 und die Vorsprünge 14 der Bremskontur 9 selbst verläuft und liegt bezogen auf den Radius R des Rotors 6 in einem Bereich von 0,1*R < LBK < 0,7*R, vorzugsweise LBK = 0,3*R.

Die Breite BBK der Bremskontur 9, also die Ausdehnung eines Vorsprungs 14 in Umfangsrichtung, liegt in einem Bereich von 0,05mm < BBK < 3,0mm, vorzugsweise ist BBK = 0,1mm.

Die Bremskontur 9 entspricht im Durchmesser dem Rotor 6, kann aber auch verringert sein, wenn die Platzverhältnisse und die Feinabstimmung der Bremsleistung über den Hebelarm und die Bremsfläche es erfordern.

Von Bedeutung ist auch die Position der Wirbelkammer 21 relativ zur Bremskontur 9. Um dies zu verdeutlichen ist in Fig. 4 dargestellt, dass die Vorsprünge 14 der Bremskontur 9 eine den Schaufeln 11 abgewandte Oberkante 25 aufweisen.

Die Wirbelkammer 21 ist in axialer Richtung des Rotors 6 definiert durch die Begrenzungsflächen 26 und 27. Der Abstand S1, auch als Höhe HSP angegeben, zwischen der Oberkante 25 der Bremskontur 9 und der oberen Begrenzungsfläche 27 der Wirbelkammer 21 ist mindestens 0,1mm und maximal das 10-fach der Höhe HBK der Bremskontur, vorzugsweise 2 x HBK. Der Abstand S2 zwischen der Oberkante 25 und der unteren Begrenzungsfläche 26 ist mindestens 0,5*a und maximal 3*a, idealerweise 1,5*a.

Weiterhin relevant ist die Position der Wirbelkammer 21 relativ zum Rückluftkanal 8. Der Abstand s3 zwischen der oberen Begrenzungsfläche 27 und der Oberseite 28 des Rückluftkanals 8 kann mindestens Null und maximal s3 < (s1 + HBK + HLA) sein, besonders geeignet ist s3 = s1 + HBK.

Die Wirbelkammer 21 selbst ist frei von zusätzlichen Leiteinrichtungen und erstreckt sich in Drehrichtung des Rotors 6 über einen Winkelbereich Alpha im vorliegenden Fall von ca. Alpha gleich 45°, dargestellt in Fig. 5.

Für alle Ausführungsformen gilt, dass die Turbinenkammer an der Auslassöffnung 12 zum Rückluftkanal 8 oder zur Wirbelkammer 21 hin wie in Fig. 3 und 5 dargestellt eine scharfe Auslasskante 23 aufweisen kann, damit ein starker Auslasswirbel entsteht, der mit der Bremskontur 9 zusammenwirkt.

Es hat sich gezeigt, dass die Strömungsverhältnisse an der Auslassöffnung mit der Bremskontur derart zusammenwirken, dass bei höheren Drehzahlen eine Abbremsung bewirkt wird, wohingegen bei niedrigeren Drehzahlen eine nur unwesentliche Einbuße von Drehmoment stattfindet.

Für das Verständnis der Erfindung wird darauf hingewiesen, dass anstelle von Druckluft auch andere Fluide verwendet werden können. Darüber hinaus wird auch dann allgemein von Druckluft gesprochen, wenn eine teilweise Entspannung stattgefunden hat und der Druckunterschied zum Atmosphärendruck nur noch gering ist, wie es etwa bei der Abluft in dem Rückluftkanal 8 der Fall ist.

## Patentansprüche

1. Zahnärztliches Präparationsinstrument (1) mit einer Turbine (4) zum Antrieb eines Werkzeugs (3) mittels Druckluft, aufweisend einen in einer Turbinenkammer (5) angeordneten und sich um eine Längsachse (7) drehenden Rotor (6), der sich bis zu einer Stirnseite (13) des Rotors (6) hin erstreckende Schaufeln (11) aufweist, wobei die Turbinenkammer (5) eine Auslassöffnung (12) für die Druckluft zu einem Rückluftkanal (8) hin aufweist, wobei die Auslassöffnung (12) derart angeordnet ist, dass sowohl die Stirnseite (13) des Rotors (6) bei der Drehung um die Längsachse (7) als auch Teile der Schaufeln (11) seitlich an der Auslassöffnung (12) vorbeistreichen, wobei der Rotor (6) auf der Stirnseite (13) eine durch Vorsprünge (14) in Form von über die Stirnseite vorstehenden Rippen oder Stegen, zwischen denen ein Zwischenraum besteht, der radial zur Auslassöffnung hin geöffnet ist, gebildete Bremskontur (9) aufweist, wobei die Turbinenkammer (5) einen Bremskonturraum (15) aufweist, in dem die Bremskontur (9) aufgenommen ist und wobei sich die Auslassöffnung (12) teilweise auch über den Bremskonturraum (15) erstreckt, **dadurch gekennzeichnet, dass** im Rückluftkanal (8) eine sich an die Auslassöffnung (12) anschließende Wirbelkammer (21) vorgesehen ist, deren Breite B quer zur Längsachse (7) und quer zur Strömungsrichtung des Rückluftkanals (8) mindestens das 1,2-fache bis 3-fache und deren Länge LW in Strömungsrichtung des Rückluftkanals (8) mindestens das 0,3-fache bis 1,5-fache einer Bezugsgröße a beträgt, wobei die Bezugsgröße a entweder als ein Bereich vom 0,5 bis 1,5-fachen der kleinsten Weite w oder als ein Bereich vom 0,5 bis 1,5-fachen der Höhe HLA der Schaufeln 11 des Rotors 6 ausgedrückt ist.

2. Zahnärztliches Präparationsinstrument nach Anspruch 1, **dadurch gekennzeichnet, dass** die Turbinenkammer (5) an der Auslassöffnung (12) zur Wirbelkammer (21) hin eine scharfe Auslasskante (23) aufweist.

3. Zahnärztliches Präparationsinstrument nach einem der Ansprüche 1 bis 2, **dadurch gekennzeichnet, dass** die Auslassöffnung (12) die Bremskontur (9) in der Höhe vollständig überdeckt.

4. Zahnärztliches Präparationsinstrument nach einem der Ansprüche 1 bis 3, **dadurch gekennzeichnet, dass** die Auslassöffnung (12) die Schaufeln (11) in der Höhe vollständig überdeckt.

5. Zahnärztliches Präparationsinstrument nach einem der Ansprüche 1 bis 4, **dadurch gekennzeichnet, dass** die Stirnseite (13) der Schaufeln (11) der Turbine (4) mit einer Scheibe (16) abgedeckt ist und dass die Bremskontur (9) über die Scheibe (16) hervorsteht.

6. Zahnärztliches Präparationsinstrument nach einem der Ansprüche 1 bis 5, **dadurch gekennzeichnet, dass** die Bremskontur (9) eine Höhe HBK in Richtung der Längsachse (7) von mindestens 5% der Höhe HLA der Schaufeln (11) aufweist, vorzugsweise 20% und höchstens 50% beträgt.

7. Zahnärztliches Präparationsinstrument nach einem der Ansprüche 1 bis 6, **dadurch gekennzeichnet, dass** die Bremskontur (9) Rippen (17) aufweist, die gegenüber den Schaufeln (11) der Turbine (4) gegenläufig gekrümmt sind.

8. Zahnärztliches Präparationsinstrument nach einem der Ansprüche 1 bis 7, **dadurch gekennzeichnet, dass** die Wirbelkammer (21) frei von zusätzlichen Leiteinrichtungen ist.

9. Zahnärztliches Präparationsinstrument nach einem der Ansprüche 1 bis 8, **dadurch gekennzeichnet, dass** die Wirbelkammer (21) sich über einen Bereich von maximal 120° erstreckt.

10. Zahnärztliches Präparationsinstrument nach einem der Ansprüche 1 bis 9, **dadurch gekennzeichnet, dass** die Wirbelkammer (21) gerundete Auslasskanten (24) in den Rückluftkanal (8) aufweist.

## Claims

1. Dental preparation instrument (1) having a turbine (4) for driving a tool (3) by means of compressed air, said dental preparation instrument comprising a rotor (6), which rotates about a longitudinal axis (7) and is disposed in a turbine chamber (5), said rotor comprising blades (11) that extend up to an end face (13) of the rotor (6), wherein the turbine chamber (5) comprises an outlet port (12) for the compressed air to a return air duct (8), wherein the outlet port (12) is arranged in such a way that both the end face (13) of the rotor (6) and parts of the blades (11) move past the outlet port (12) laterally during rotation about the longitudinal axis (7), wherein on the end face (13) the rotor (6) comprises a decelerating contour (9), which is formed by projections (14) in the form of ribs or webs, which protrude beyond the end face and between which there is an intermediate space that is open radially towards the outlet port, wherein the turbine chamber (5) comprises a decelerating contour space (15), in which the decelerating contour (9) is accommodated, and wherein the outlet port (12) also extends partially over the decelerating contour space (15),
**characterized in that** an eddy chamber (21), which is connected to the outlet port (12), is provided in the return air duct (8), and the width B of said eddy chamber transversely with respect to the longitudinal axis (7) and transversely with respect to the direction of flow of the return air duct (8) is at least 1.2 times to 3 times and the length LW of said eddy chamber in the direction of flow of the return air duct (8) is at least 0.3 times to 1.5 times a reference variable a, wherein the reference variable a is expressed as either a range from 0.5 to 1.5 times the smallest width w or as a range from 0.5 to 1.5 times the height HLA of the blades 11 of the rotor 6.

2. Dental preparation instrument, as claimed in claim 1, **characterized in that** the turbine chamber (5) comprises a sharp outlet edge (23) at the outlet port (12) to the eddy chamber (21).

3. Dental preparation instrument, as claimed in any one of the claims 1 to 2, **characterized in that** the outlet port (12) completely covers the decelerating contour (9) vertically.

4. Dental preparation instrument, as claimed in any one of the claims 1 to 3, **characterized in that** the outlet port (12) completely covers the blades (11) vertically.

5. Dental preparation instrument, as claimed in any one of the claims 1 to 4, **characterized in that** the end face (13) of the blades (11) of the turbine (4) is covered by a disk (16) and that the decelerating contour (9) protrudes beyond the disk (16).

6. Dental preparation instrument, as claimed in any one of the claims 1 to 5, **characterized in that** the decelerating contour (9) has a height HBK in the direction of the longitudinal axis (7) of at least 5% of the height HLA of the blades (11), preferably 20% and no more than 50%.

7. Dental preparation instrument, as claimed in any one of the claims 1 to 6, **characterized in that** the decelerating contour (9) comprises ribs (17) that are curved in the opposite direction with respect to the blades (11) of the turbine (4).

8. Dental preparation instrument, as claimed in any one of the claims 1 to 7, **characterized in that** the eddy chamber (21) is free of additional guide devices.

9. Dental preparation instrument, as claimed in any one of the claims 1 to 8, **characterized in that** the eddy chamber (21) extends over a range of maximally 120 deg.

10. Dental preparation instrument, as claimed in any one of the claims 1 to 9, **characterized in that** the eddy chamber (21) comprises rounded outlet edges (24) in the return air duct (8).

## Revendications

1. Instrument de préparation dentaire (1) doté d'une turbine (4) pour l'entraînement d'un outil (3) au moyen d'air comprimé, présentant un rotor (6) disposé dans une chambre de turbine (5) et en rotation autour d'axe longitudinal (7), qui présente des pales (11) s'étendant jusqu'à une face frontale (13) du rotor (6), où la chambre de turbine (5) présente un orifice de sortie (12) pour l'air comprimé vers un canal de recyclage d'air (8), où l'orifice de sortie (12) est disposé de telle manière qu'à la fois la face frontale (13) du rotor (6) lors de la rotation autour de l'axe longitudinal (7) et des parties des pales (11) frôlent latéralement l'orifice de sortie (12), où le rotor (6) présente un contour de freinage (9) formé sur la face frontale (13) par des protubérances (14) sous la forme de nervures ou de barrettes dépassant de la face frontale, entre lesquelles se trouve un espace intermédiaire qui est ouvert radialement vers l'orifice de sortie, où la chambre de turbine (5) présente une chambre de contour de freinage (15) dans laquelle est logé le contour de freinage (9) et où l'orifice de sortie (12) de contour de freinage s'étend également partiellement au-dessus de la chambre (15), **caractérisé en ce qu'une** chambre de turbulence (21) adjacente à l'orifice de sortie (12) est prévue dans le canal de recyclage d'air (8), dont la largeur B perpendiculairement à l'axe longitudinal (7) et perpendiculairement au sens d'écoulement du canal de recyclage d'air (8) correspond à au moins 1,2 fois à 3 fois une valeur de référence et dont la longueur LW dans le sens d'écoulement du canal de recyclage d'air (8) correspond à au moins 0,3 fois à 1,5 fois une valeur de référence, où la valeur de référence a est exprimée par soit sous la forme d'une plage de 0,5 à 1,5 fois la plus petite largeur = w soit sous la forme d'une plage de 0,5 à 1,5 fois la hauteur HLA des pales 11 du rotor 6.

2. Instrument de préparation dentaire selon la revendication 1, **caractérisé en ce que** la chambre de turbine (5) présente une arête de sortie (23) affutée vers la chambre de turbulence (21) au niveau de l'orifice de sortie (12).

3. Instrument de préparation dentaire selon l'une des revendications 1 à 2, **caractérisé en ce que** l'orifice de sortie (12) recouvre totalement le contour de freinage (9) dans la hauteur.

4. Instrument de préparation dentaire selon l'une des revendications 1 à 3, **caractérisé en ce que** l'orifice de sortie (12) recouvre totalement les pales (11) dans la hauteur.

5. Instrument de préparation dentaire selon l'une des revendications 1 à 4, **caractérisé en ce que** la face frontale (13) des pales (11) de la turbine (4) est recouverte avec un disque (16) et que le contour de freinage (9) dépasse par-dessus le disque (16).

6. Instrument de préparation dentaire selon l'une des revendications 1 à 5, **caractérisé en ce que** le contour de freinage (9) présente une hauteur HBK en direction de l'axe longitudinal (7) d'au moins 5 % de la hauteur HLA des pales (11), de préférence 20 % et au maximum de 50 %.

7. Instrument de préparation dentaire selon l'une des revendications 1 à 6, **caractérisé en ce que** le contour de freinage (9) présente des nervures (17) qui sont incurvées en sens contraire par rapport aux pales (11) de la turbine (4).

8. Instrument de préparation dentaire selon l'une des revendications 1 à 7, **caractérisé en ce que** la chambre de turbulence (21) est exempte de dispositifs de guidage complémentaires.

9. Instrument de préparation dentaire selon l'une des revendications 1 à 8, **caractérisé en ce que** la chambre de turbulence (21) s'étend sur une région d'au maximum 120 °.

10. Instrument de préparation dentaire selon l'une des revendications 1 à 9, **caractérisé en ce que** la chambre de turbulence (21) présente des arêtes de sortie (24) arrondies vers le canal de recyclage d'air (8).
